# EUROPEAN PATENT APPLICATION

(11) **EP 1 743 825 A2**
(43) Date of publication of application: **17.01.2007**
(21) Application number: 06117050.2
(22) Date of filing: 12.07.2006
(51) Int. Cl.: B62B 9/10

(54) **Cushion for baby carriage**

(30) Priority: 12.07.2005 JP 2005202984
(71) Applicant: Combi Corporation, Taito-ku, Tokyo (JP)
(72) Inventor: Kigushi, Momoe c/o Combi Corporation, Minami-ku Saitama-shi Saitama (JP); Okahashi, Akira c/o Combi Corporation, Minami-ku Saitama-shi Saitama (JP); Inoue, Masaharu c/o Combi Corporation, Minami-ku Saitama-shi Saitama (JP)
(74) Representative: Viering, Jentschura & Partner

(57) **Abstract**

In a cushion (5) of a baby carriage seat comprising a head pad in a head support region; a lumber pad (30) in a lumber support region (A2); and a buttock pad in a buttock support region (A3), the lumber pad (50) and the buttock pad are separated about a longitudinal direction. The lumber pad is configured to support an infant from both sides by a pair of side support portions (32) projecting independently from surroundings in mountain-shape at both ends of width direction of the lumber support region. The buttock pad is configured to support a buttock of the infant by a buttock support portion (53) projected at a center of the width direction of the buttock pad, a knee is supported from the outside by a pair of knee support portions (54) projecting larger than the buttock support portion at both ends of the width direction.

## Description

### BACKGROUND OF THE INVENTION

### Field of the Invention

The present invention relates to an attitude holding cushion provided in a seat of a baby carriage.

### Description of the Related Art

For a seat structure of a baby carriage, there is known a seat structure in which a flat base cushion is arranged substantially all over the surface of the seat (for example, see Japanese Patent Application Laid-Open (JP-A) No. 2004-216998). For the cushion used in an automobile child seat or a baby crib, there is also proposed a cushion in which all circumferences of a flat base seat are surrounded by a projection portionorawallportion (forexample, seeJP-ANo. 2000-296734) .

Because a baby carriage is used to carry an infant out of doors, the baby carriage is easy to subject to vibration during use when compared with the baby crib used indoors. Therefore, it is desirable that an appropriate attitude holding effect is imparted to the seat so as not to shift an infant position. However, the sufficient attitude holding effect cannot be generated in the flat cushion. In the baby carriage, because shock applied to the infant is small compared with the child safety seat, the high attitude holding effect or shock cushioning effect is not required unlike the child safety seat. On the contrary, it is desirable that the baby carriage seat be configured such that the infant moves freely to some extent by appropriately releasing the attitude holding effect. In many baby carriages, the seat is formed to be able to be reclined, or the whole of baby carriage is formed to be able to be folded. In reclining the seat or in folding the baby carriage, it is necessary that the cushion be formed such that the seat can smoothly be deformed.

### SUMMARY OF THE INVENTION

In view of the foregoing, an object of the invention is to provide a cushion suitable for the baby carriage.

In order to achieve the object a cushion for the baby carriage of the present invention comprises: a lumber pad which is arranged in a lumber support region of a seat of a baby carriage; and a buttock pad which is arranged in a buttock support region of the seat, wherein the lumber pad and the buttock pad are separated from each other about a longitudinal direction of the seat, the lumber pad is configured such that an infant is supported from both sides by a pair of side support portions projecting independently from a surroundings in a mountain shape at both end portions of a right and left direction of the lumber support region, the buttock pad is configured such that a buttock of the infant is supported by a buttock support portion being projected at a center portion of the right and left direction of the buttock pad, and a knee of the infant is supported from the outside by a pair of knee support portions being projecting larger than the buttock support portion at both end portions of the right and left direction of the pad.

According to the cushion of the invention, the attitude of the infant can be held by supporting the buttock from both sides of the infant with the lumber pad and the buttock pad. The shift of the buttock toward the front of the seat can be suppressed by putting the buttock support portion to the infant buttock. Therefore, abdominal part curvature and oppression caused by the forward shift of the buttock is prevented. The side shift of a trunk of the infant can be prevented by supporting the infant fromboth sides with the pair of side support portions of the lumber pad. Further, the knee support portion of the buttock pad supports the infant knee from the outside, which allows the infant knee to be properly folded inside to keep the lower extremity proper orientation, therefore, a balance between a flexor and an extensor of a lower part of the infant is properly held to prevent deformation or atrophy of the body. The side support portion of the lumber pad is provided so as to be projected independently from the surroundings in a mountain shape, so that a degree of freedom about the hand movement of the infant can relatively easily be enhanced. Because the lower extremity can be orientated toward an appropriate direction by putting the knee support portion of the buttock pad to the outside of the knee, it is not necessary that the infant lower extremitybe surrounded over all the circumferences, and a degree of freedom about the leg movement of the infant can relatively easily be enhanced. Further, the lumber pad and the buttock pad are separated from each other, so that the seat can relatively easily be deformed when it is reclined or folded. In addition, the side support portion is projected independently from the surroundings. Thereby, resistance to the reclining or folding of the seat is suppressed to the lower level compared with the case in which the continuous projection portion or the wall portion is formed from the lumber support region to the buttock support region.

According to one embodiment of the present invention, the pair of side support portions may be separated from each other about the right and left direction. In folding the seat in the right and left direction, the resistance can further be decreased to deform the seat more easily by separating the side support portion.

According to one embodiment of the present invention, an edge line of the buttock support portion of the buttock pad is curved about a height direction so as to draw a concave curved line whose bottom is a central portion of the right and left direction of the buttock pad. By imparting such curvature to the edge line of the buttock support portion, the infant lower extremity can securely be orientated toward the inside. Further the buttock support portion and the pair of knee support portions may be integrally connected, thereby a smooth curved line may be formed from the bottom of the buttock support portion to a vertex of the knee support portion. The buttock pad can naturally be put to the infant lower extremity to improve the infant comfort by imparting the curved line.

According to one embodiment of the present invention, the lumber pad may be provided with a first pad portion and a second pad portion which are mutually independently detachable to the seat, the first pad portion may be provided with the buttock support portion, and the second pad portion may be provided with the pair of knee support portions. In this case, the mode in which both the first pad portion and the second pad portion are used and the mode in which either the first pad portion or the second pad portion is used can be separated according to need. For example, both the pad portions are used when a priority is given to the attitude holding effect by the buttock support portion and the knee support portion, and the unnecessary pad portion can be detached from the seat to enhance the degree of freedom for the leg movement of the infant when either the buttock support portion or the knee support portion is used.

According to one embodiment of the present invention, the cushion may comprise a head pad which is arranged in a head support region (A1) of the seat. The infant head is kept proper attitude by providing the head pad, thereby the attitude holding effect can further be enhanced. Particularly it is effective to add the head pad for a baby in a lower age in month whose head is not held up.

A neck support portion extending along a lower edge of the head pad and a pair of temporal support portions extending along both side edges of the head pad may be provided as a projection portion for supporting the infant in the head pad. According to the embodiment, the infant head can be held to an attitude in which a jaw of the infant is raised in some degree by supporting the infant head with the neck support portion. Thereby, the oppression of an airway can be prevented to cause the infant to take breath without any difficulty. By putting the temporal support portion to the infant head from the side, the side toppling and side shift of the head are prevented, thus the infant head can be orientated toward the front face.

In above embodiment, an edge line of the neck support portion may be curved about a height direction so as to draw a concave curved line whose bottom is a central portion of the right and left direction of the head pad. The infant rear neck can naturally be positioned in the center of the right and left direction of the head pad to prevent the side shift of the head by imparting the curvature to the neck support portion.

In above embodiment, an inner periphery of the temporal support portion may be provided with a support surface recessed in a cone shape. The temporal support portion can be fit to the temporal region of the infant to naturally orientate the head toward the front face by providing the support surface.

An edge line of the temporal support portion is gradually lowered toward an upper edge side of the head pad. Thereby, a feeling that the head is surrounded by the temporal support portion is reduced to enhance open-feeling of the infant.

Further, the projection portion may not exist at least in the central portion of the upper edge of the head pad, thereby a recess portion surrounded by the projection portion may be opened to the upper edge side of the head pad. According to the embodiment, the open-feeling of the infant is enhanced because the parietal region is not constrained by the projection portion.

According to one embodiment of the present invention, at least one pad may be attached to a detachable seat cover covering the surface of the seat position-adjustably in the longitudinal direction of the seat. In the embodiment, the support portion can be changed according to the infant physical body by changing the pad position. The position can easily be adjusted by attaching the pad to the seat cover.

Alternatively, at least one pad may be attached to a base plate which is arranged as a core material inside the seat. In the case the base plate is provided with the pad, it is not necessary to attach and detach the pad on the base plate when the seat cover is taken out from the base plate. A task for taking out the pad can be eliminated in washing the seat cover or the like. The pad attached to the base plate may be adjustable in position for the longitudinal direction of the seat.

As used herein, the term of infant shall include a wide range of a baby stage to a school age unless otherwise noted.

### BRIEF DESCRIPTION OF THE DRAWINGS

In the drawings attached,
FIG. 1 is a perspective view showing a baby carriage to which a cushion according to an embodiment of the invention is applied;
FIG. 2 is a plan view showing a baby carriage seat;
FIG. 3 is a plan view of a head pad;
FIG. 4 is a perspective view showing the head pad when viewed laterally;
FIG. 5 is a perspective view showing the head pad when viewed from a lower edge side;
FIG. 6 is a side view showing the head pad when viewed from a direction of an arrow VI of FIG. 3;
FIG. 7 is a side view showing the head pad when viewed from a direction of an arrow VII of FIG. 3;
FIG. 8 is a perspective view showing a lumber pad when viewed from the lower edge side;
FIG. 9 is a side view showing the lumber pad when viewed from a direction of an arrow IX of FIG. 8;
FIG. 10 is a side view showing the lumber pad when viewed from a direction of an arrow X of FIG. 8;
FIG. 11 is a plan view of a buttock pad;
FIG. 12 is a perspective view of the buttock pad;
FIG. 13 is a side view showing the buttock pad when viewed from a direction of an arrow VIII of FIG. 11;
FIG. 14 is a side view showing the buttock pad when viewed from a direction of an arrow XIV of FIG. 11;
FIG. 15A shows a state in which a neck support portion of the head pad supports a rear neck of an infant;
FIG. 15B shows a state in which a temporal support portion of the head pad supports a temporal region of the infant;
FIG. 16 shows a state in which a side support portion of the lumber pad supports a flank of the infant;
FIG. 17 shows a state in which the buttock pad supports a buttock and knee of the infant;
FIG. 18 shows an embodiment in which side support portions of the lumber pad are separated from each other;
FIG. 19 shows a embodiment in which the buttock pad is divided into a first pad portion and a second pad portion;
FIG. 20 shows a modification of FIG. 19;
FIG. 21 shows an example of a configuration in which each pad is detachably attached to a seat cover;
FIG. 22 is a sectional view showing a state in which the head pad of FIG. 21 is attached to the seat cover;
FIG. 23 shows another example of the configuration in which each pad is detachably attached to the seat cover;
FIG. 24 shows a configuration of a connecting portion of the head pad and the lumber pad of FIG. 23;
FIG. 25 shows still another example of the configuration in which each pad is detachably attached to the seat cover;
FIG. 26 is a sectional view showing a state in which the lumber pad of FIG. 25 is attached to the seat cover;
FIG. 27 shows an example in which each pad is attached to a base plate of the seat; and
FIG. 28 is a sectional view corresponding to the attachment state of FIG. 27.

### DETAILED DESCRIPTION OF THE PREFERRED EMBODIMENT

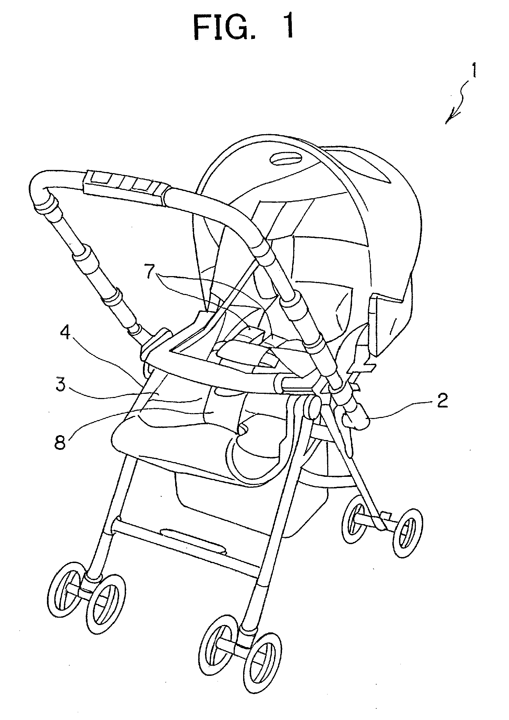

Cushions for a baby carriage according to preferred embodiments of the invention will be described below. FIG. 1 shows an example of a baby carriage to which the cushion is applied. The baby carriage 1 includes a baby carriage main body 2 and a seat 3. The baby carriage main body 2 has a frame structure in which pipe materials are appropriately combined, and the seat 3 is attached to the baby carriage main body 2. The baby carriage main body 2 is configured to be able to be folded in a back and forth direction and in a right and left direction, and the seat 3 is configured to be able to be reclined. A folding mechanism and a recliningmechanism of the baby carriage 1 are similar to those of the well-known baby carriage.

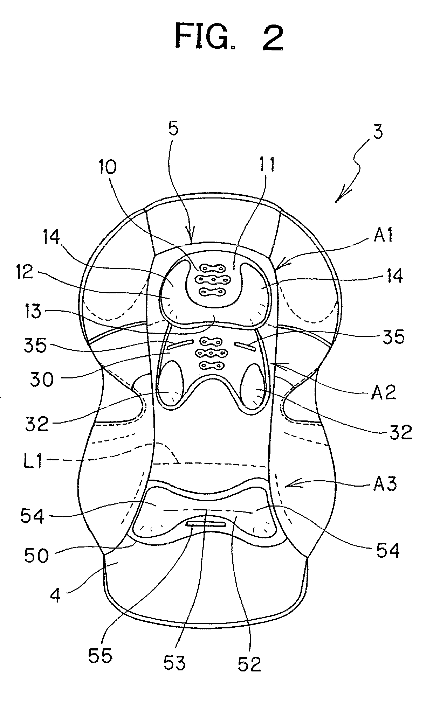

FIG. 2 is a plan view of the seat 3. The seat 3 has a structure in which a base plate (not shown) made of an elastic material such as resin is covered with a seat cover 4. The seat 3 can be folded along a bending line L1. The seat cover 4 can be detached from the base plate. The seat cover 4A is provided with a cushion 5. The cushion 5 includes a head pad 10, a lumber pad 30, and a buttock pad 50. The head pad 10 is arranged in a head support region A1 of the seat 3, the lumber pad 30 is arranged in a lumber support region A2 of the seat 3, and the buttock pad 50 is arranged in a buttock support region A3 of the seat 3. These pads 10, 30, and 50 are formed as mutually independent components. The head pad 10 and the lumber pad 30 are coupled to each other. On the other hand, the lumber pad 30 and the buttock pad 50 are attached to the seat cover 4 while separated from each other in a longitudinal direction (vertical direction of FIG. 2) of the seat 3 across the bending line L1.

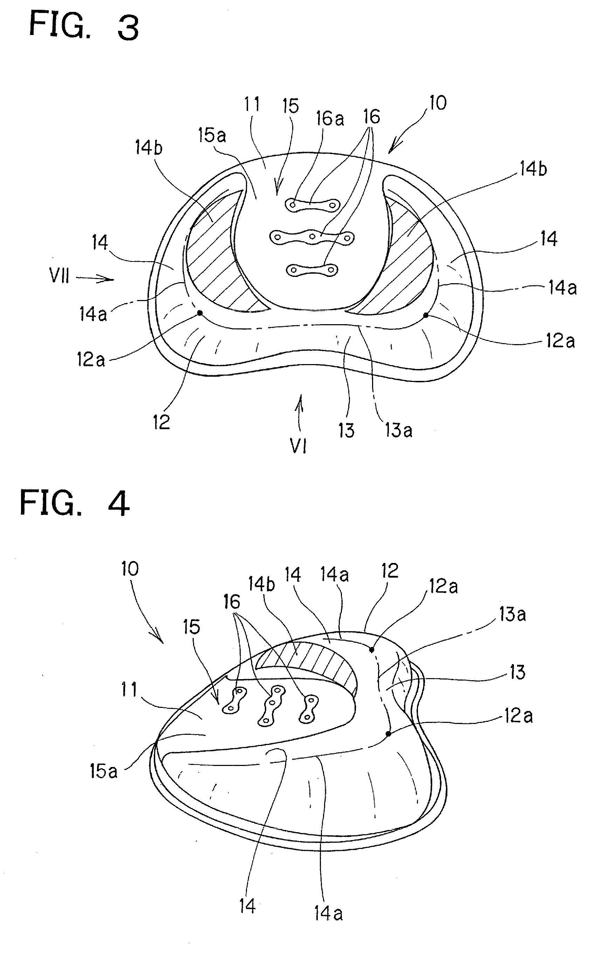

FIGS. 3 to 7 show the detail of the head pad 10. As shown in FIGS. 3 and 4, the head pad 10 comprises a base seat 11 and a projection portion 12 provided along an outer periphery of the base seat 11. The base seat 11 is formed in a flat shape having round shaped outer periphery. The projection portion 12 comprises a neck support portion 13 and a pair of temporal support portions 14. The neck support portion 13 is extended along a lower edge of the head pad 10, and the pair of temporal support portions 14 is extended along both side edges of the head pad 10. The neck support portion 13 is provided to support the rear neck of the infant, and the temporal support portion 14 is provided to support the head of the infant from the side. The neck support portion 13 and the temporal support portion 14 are integrally connected. The temporal support portion 14 is terminated at a position where the temporal support portion 14 substantially reaches an upper edge of the head pad 10, and the projection portion 12 does not exist in at least the center of the upper edge of the head pad 10. Thereby, a recess portion 15 is generated on the base seat 11. In the recess portion 15, the lower edge and side edges are surrounded by the projection portion 12, and the upper edge is opened. The recess portion 15 functions as a portion which accepts an occipital region of the infant.

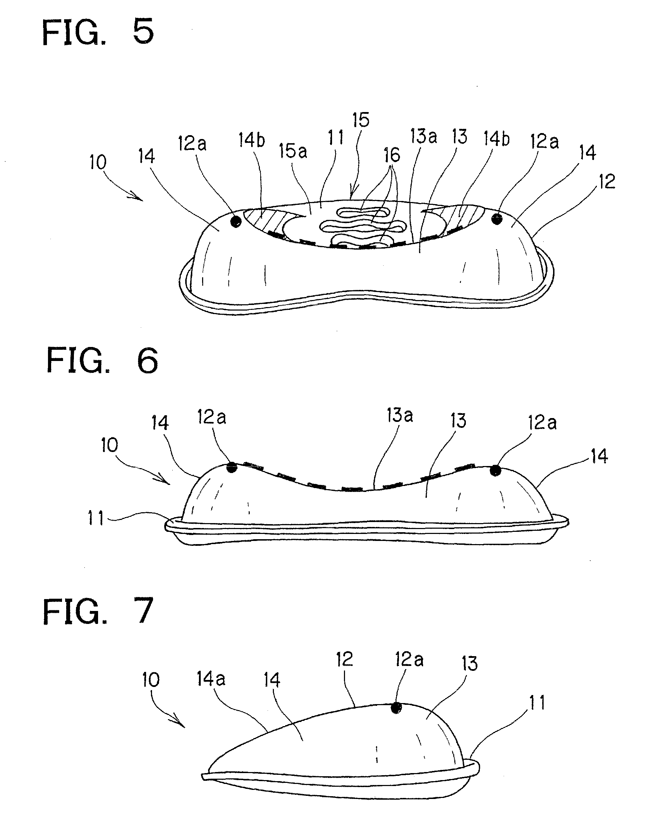

As shown by broken lines in FIGS. 5 and 6, an edge line 13a of the neck support portion 13 is curved in a height direction (thickness direction of the head pad 10) so as to draw a concave curved line whose bottom is a center portion in the right and left direction of the head pad 10. On the other hand, as can be seen from FIG. 7, an edge line 14a of the temporal support portion 14 is inclined so as to be gradually lowered from the lower edge of the head pad 10 toward the upper edge side (left in FIG. 7). A front end of the temporal support portion 14 has the substantially same height as the base seat 11. Accordingly, the projection portion 12 has a vertex 12a at a boundary position between the neck support portion 13 and the temporal support portion 14, and the height of the projection portion 12, i.e., an amount of projection from the base seat 11 is decreased as the projection portion 12 is separated away from the vertex 12a along the edge lines 13a and 14a.

As shown by hatch lines in FIGS. 3 to 5, a support surface 14b which is recessed in a bowl shape is provided in an inner periphery of the temporal support portion 1, i.e., a region located inside the edge line 14a. The support surface 14b functions as an inclined surface which laterally supports the infant head accepted in the recess portion 15. Plural concave portions 16 are provided in a bottom surface 15a of the recess portion 15. While the concave portion 16 functions as a positioning portion which suppresses the shift of the infant occipital region, the concave portion 16 performs the function of generating a gap between the infant occipital region and the base seat 11 to ensure air flow. Air holes 16a are made in the concave portion 16. Instead of the air holes 16a, the bottom surface of the concave portion 16 may be made of a mesh material having the excellent aeration property.

Dimensions of each portion such as the height of the projection portion 12, the inclined angle of the support surface 14b, and a size of the recess portion 15 can appropriately be determined according to a physical size of the infant which is of the target of the baby carriage 1. However, desirably the height of the neck support portion 13 is adjusted to the projection amount of the occipital region based on the infant rear neck, and desirably a width of the recess portion 15 is adjusted to the size of the occipital region. Only as a guide, based on the surface of the base seat 11, i.e., the bottom surface 15a of the recess portion 15, the center height of the neck support portion 13 can be set at about 10 mm, the height of the vertex 12a of the projection portion 12 can be set at about 20 mm, and the inclined angle can be set at about 45° with respect to a horizontal direction of the support surface 14b. The bottom surface 15a of the recess portion 15 can be provided such that a circular region having a diameter of about 100 mm is ensured. An elastic material having a proper aeration property may be provided as an interior material in the head pad 10. The elastic material such as cotton, urethane, low-repulsion urethane, and gel can be used as the interior material. The interior material may be provided only in the projection portion 12, or the interior material may be provided in both the base seat 11 and the projection portion 12.

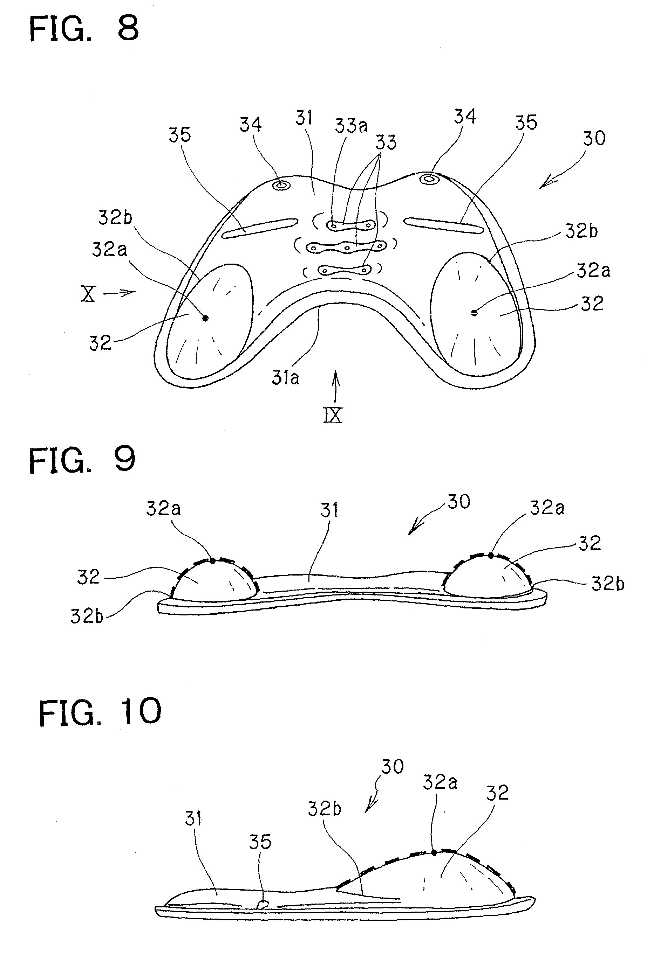

FIGS. 8 to 10 show the detail of the lumber pad 30. The lumber pad 30 comprises a base seat 31 and a pair of side support portions 32 arranged in both end portions in the right and left direction of the lower edge of the base seat 31. The base seat 31 is formed in the flat shape like the base seat 11 of the head pad 10. Each side support portion 32 is provided so as to project independently from the surroundings in a mountain shape. That is, the side support portion 32 is formed as a projection in which the altitude is gradually decreased from the vertex 32a toward all the directions, the side support portion 32 does not intersect the other projection portion, and an outer periphery 32b draws a closed loop on the surface of the base seat 31. The outer periphery 32b may be formed in various shapes such as a circle, an oval, an ellipse, a barrel shape, and an egg shape. As shown by broken lines in FIGS. 9 and 10, the surface of the side support portion 32 is curved so as to draw a convex curve line. As shown in FIG. 8, a concave portion 31a is formed in the central portion of the lower edge of the base seat 31 so as to intrude into the upper edge side of the lumber pad 30 from the outer periphery 32b of the side support portion 32. By providing the concave portion 31a, resistance imparted by the lumber pad 30, when the seat 3 is folded in right and left direction, can be decreased.

Plural concave portions 33 are provided in the base seat 31. While the concave portion 33 functions as a positioning portion which prevent the shift of a back portion or the lumber of the infant, the concave portion 33 performs the function of generating a gap between the back portion or lumber of the infant and the base seat 31 to ensure air flow. Air holes 33a are made in the concave portion 33. Instead of the air holes 33a, the bottom surface of the concave portion 33 may be made of a mesh material having the excellent aeration property. A pair of hooks 34 and a belt through hole 35 are also provided in the base seat 31. The pair of hook 34 is a coupling tool which couples the head pad 10 and the lumber pad 30, and the belt through hole 35 attaches the lumber pad 30 to the seat cover 4. A hook (not shown) which can engage the hook 34 is provided in the backside of the head pad 10. A method of utilizing the hook 34 and the belt through hole 35 to attach the lumber pad 30 will be described later.

The size of the side support portion 32 can appropriately be determined according to the physical size of the infant which is of the target of the baby carriage 1. However, desirably the size and position of the side support portion 32 are adjusted so as to be able to properly support the infant from the side. Only as a guide, based on the surface of the base seat 31, the height of the vertex 32a of the projection portion 32 can be set at about 15 mm, a distance between the vertexes 32a can be set in the range of about 100 mm to about 150 mm, and the inclined angle can be set at about 45° with respect to the horizontal direction of the surface of the side support portion 32. An elastic material having a proper aeration property may be provided as the interior material in the lumber pad 30. The elastic material such as cotton, urethane, low-repulsion urethane, and gel can be used as the interior material. The interior material may be provided only in the side support portion 32, or the interior material may be provided in both the base seat 31 and the side support portion 32.

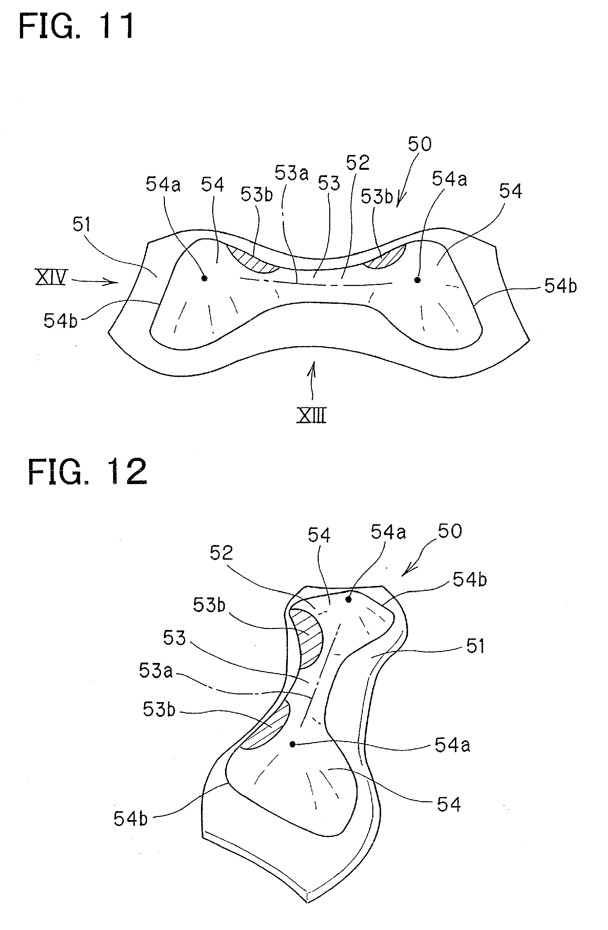

FIGS. 11 to 14 show the detail of the buttock pad 50. The buttock pad 50 includes a base seat 51 and a projection portion 52 extended in the right and left direction on the base seat 51. The base seat 51 is formed in the flat shape like the base seats 11 and 31 of the head pad 10 and lumber pad 30. The projection portion 52 comprises a buttock support portion 53 and a pair of knee support portions 54 arranged in both end portions of the buttock support portion 53. The buttock support portion 53 is provided to support an infant buttock, and the knee support portion 54 is provided to support an infant knee from the side. The buttock support portion 53 and the knee support portion 54 are integrally connected.

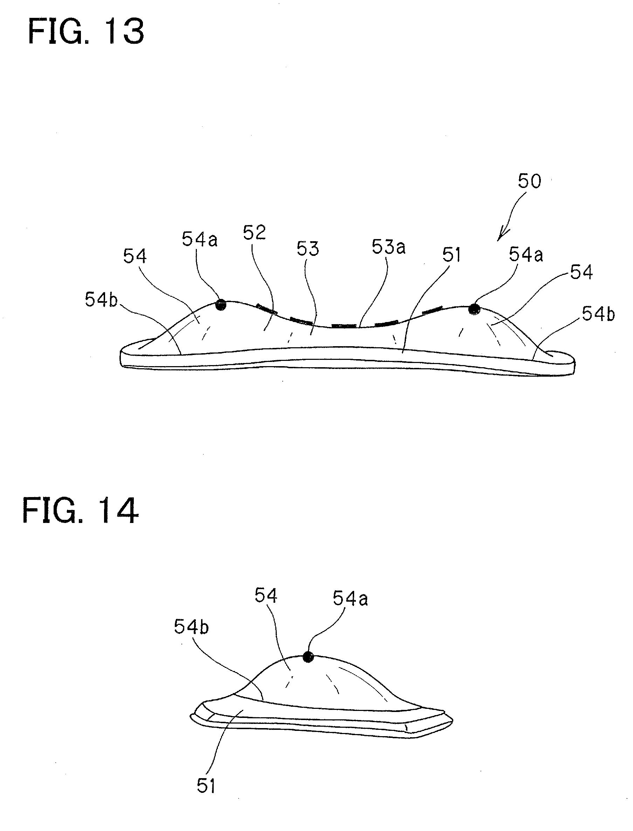

As shown by the broken line in FIG. 13, an edge line 53a of the buttock support portion 53 is curved in the height direction (thickness direction of the buttock pad 50) so as to draw a concave curved line whose bottom becomes the center portion in the right and left direction of the buttock pad 50. On the other hand, as can be seen from FIGS. 11 to 13, each knee support portion 54 is projected from the base seat 51 in a mountain shape like the side support portion 32 of the lumber pad 30. The projection amount of the knee support portion 54 is larger than that of the buttock support portion 53. As can be seen from FIG. 14, the surface of the knee support portion 54 is extended from a vertex 54a toward an outer periphery 54b of the knee support portion 54 drawing the convex curved line. An edge line 53a of the buttock support portion 53 is integrally connected to the surfaces of the knee support portions 54 on both sides, and thereby the smooth curved line is formed from the center of the buttock support portion 53 to a vertex 54a of the knee support portion 54.

As shown by hatch lines in FIGS. 11 and 12, a pair of support surface 53b which accepts the infant buttocks is provided in the side face of the buttock support portion 53. The support surface 53b is formed in the concave curved surface like the cone-shape so as to fit to the infant buttock, more particularly to the surface of a diaper attached to the buttock.

The dimensions such as the height of the projection portion 52 and the inclined angle of the support surface 53b can appropriately be determined according to the physical size of the infant which is of the target of the baby carriage 1. However, desirably the height of the buttock support portion 53 is set to a level such that the buttock support portion 53 can accept the infant buttock and, at the same time, such that an infant lower extremity can naturally surmount the buttock support portion 53. Desirably, the height and position of the knee support portion 54 is set such that the knee support portion 54 comes into contact with the infant knee from the outside and, at the same time, such that the knee does not exceed the vertex 54a of the knee support portion 54 to slip to the outside in the right and left direction. Only as a guide, based on the surface of the base seat 51, the center height of the buttock support portion 53 can be set at about 20 mm, the height of the vertex 54a can be set at about 33 mm, the distance between the vertexes 54a can be set at about 160 mm, and the inclined angle can be set in the range of about 45° to 60° with respect to the horizontal direction of the support surface 53b.

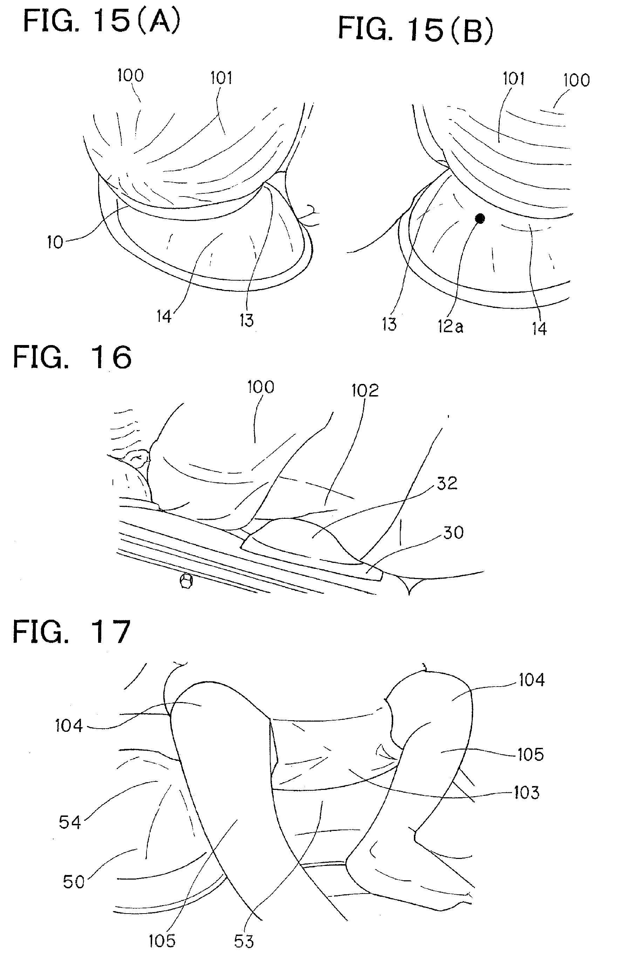

When the infant is laid down on or seated in the seat 3, the action of the cushion will be described below. In the head support region A1 (see FIG. 2) on the seat 3, the infant occipital region is accepted and supported by recess portion 15. In this case, as shown in FIG. 15A, the neck support portion 13 of the head pad 10 is put to the rear neck of an infant 100 to support the neck portion from the back. Therefore, a head 101 of the infant 100 is held to an attitude in which a jaw of the infant 100 is raised in some degree, and the oppression of an airway can be prevented to cause the infant 100 to take breath without any difficulty. Because the edge line 13a of the neck support portion 13 is curved drawing the concave curved line as shown in FIGS. 5 and 6, the neck portion of the infant 100 can naturally be positioned to the center in the right and left direction. As shown in FIG. 15B, because the head 101 is supported by the support surfaces 14b of the temporal support portion 14 from both sides, the head 101 is naturally orientated toward the front face to prevent the side toppling and side shift of the head 101. These actions are particularly effective to a baby before a baby head is held up. Because the temporal support portion 14 is gradually decreased toward the upper edge of the head pad 10, a feeling that the head 101 is surrounded by the temporal support portion 14 is reduced to enhance the open-feeling. The projection portion 12 is provided up to both side edges and the recess portion 15 is opened to the upper edge side of head pad 10, so that there is no fear that the parietal region is excessively constrained by the projection portion 12. Accordingly the open-feeling is enhanced in the infant.

In the lumber support region A2 of the seat 3, as shown in FIG. 16, the side support portion 32 of the lumber pad 30 is put to a flank 102 of the infant 100 to support the flank 102 from the outside, which prevents the side shift of a trunk of the infant 100. Because the side support portion 32 is projected in a mountain shape, the feeling that the flank 102 is surrounded by the side support portion 32 is reduced to enhance the open-feeling. Because the projection portion or the wall portion does not exist around a shoulder of the infant 100, the movement of an infant arm is not obstructed.

In the buttock support region A3 of the seat 3, as shown in FIG. 17, the support surface 53b of the buttock support portion 53 is put to a buttock 103 of the infant 100 to support the buttock 103. Thereby the shift of the infant 100 toward the front of the seat 3 is suppressed. Particularly, even in the case of the attitude in which the back of the seat 3 is raised to seat the infant 100, the buttock 103 of the infant 100 is never shifted toward the front. Accordingly, abdominal part curvature and oppression caused by the forward shift of the buttock is not generated.

The knee support portion 54 supports a knee 104 of the infant 100 so as to come into contact with the knee 104 from the outside, which allows the knee 104 to be properly folded inside. Thereby, the opening of the knee 104 toward the outside is suppressed and a lower extremity 105 is held in a proper direction. In addition, the edge line 53a of the buttock support portion 53 is merged with the surface of the knee support portion 54 with the edge line 53a curving so as to draw the concave curved line, so that the lower extremity 105 can be orientated more stably toward the inside. By these functions, the balance between a flexor and an extensor of a lower part of the infant 100 is properly held to prevent the deformation or atrophy of the body. The buttock pad 50 is configured such that the lower extremity 105 exceeds the buttock support portion 53 to stretch out the lower extremity 105 toward the front of the seat 3, and the projection portion or wall portion which surrounds the lower extremity 105 does not exist. Therefore, the movement of infant legs is not obstructed.

In the cushion 5 of the embodiment, because the lumber pad 30 and the buttock pad 50 are individually provided as mutually separated parts, therefore, when the inclination of the back portion of the seat 3 is change making the bending line L1 (see FIG. 2) between the lumber support region A2 and the buttock support region A3 as an axis, or when the seat 3 is folded along the bending line L1, the cushion 5 does not become the resistance, and the reclining operation or folding operation of the seat 3 can be relatively easily performed. Furthermore, the lumber pad 30 is configured such that the infant 100 is supported from both sides by the pair of mountain-shaped side support portions 32 arranged at the both end portions of the right and left direction, the resistance of the cushion 5 to the reclining operation or folding operation of the seat 3 can be decreased to a lower level comparing with the case in which the continuous projection portion or wall portion is provided from the lumber support region A2 to the buttock support region A3.

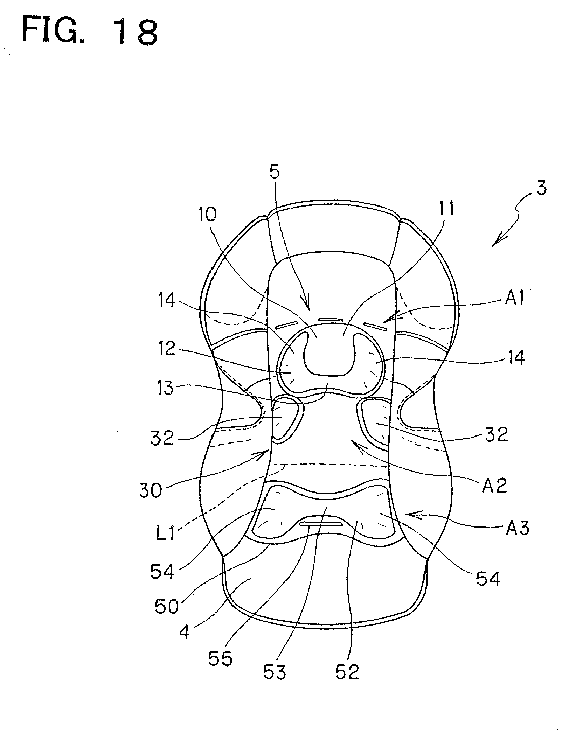

The cushion of the invention is not limited to the above embodiment, but the cushion of the invention can be realized in various modifications. Then, the cushions 5 of other modifications will be described. FIG. 18 shows a modification in which the lumber pad 30 is changed. In the modification shown in FIG. 18, the base seat 31 of the lumber pad 30 is omitted, and only the pair of side support portions 32 is provided in the lumber pad 30. That is, the pair of side support portions 32 are not coupled to each other by the base seat 31, but are separated from each other in the right and left direction. According to the configuration shown in FIG. 18, when the seat 3 is folded in the right and left direction (width direction), the resistance of the cushion 5 is further decreased, which allows the seat 3 to be deformed more easily and smoothly.

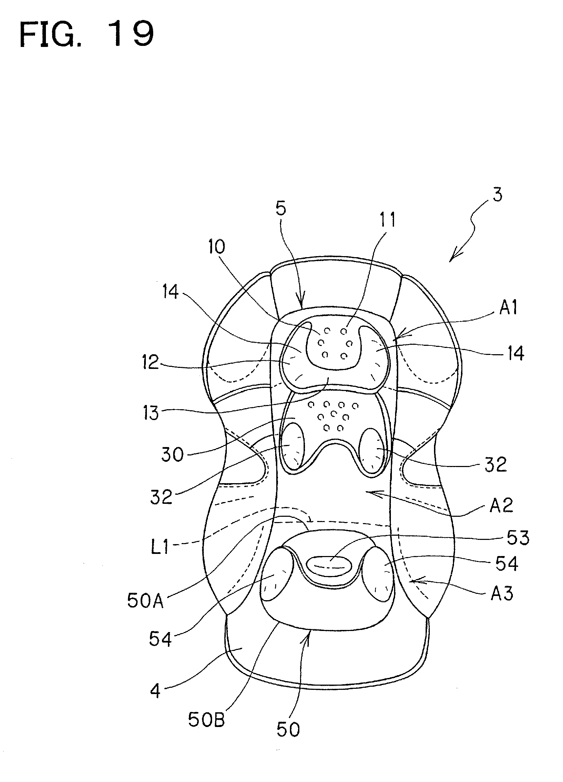

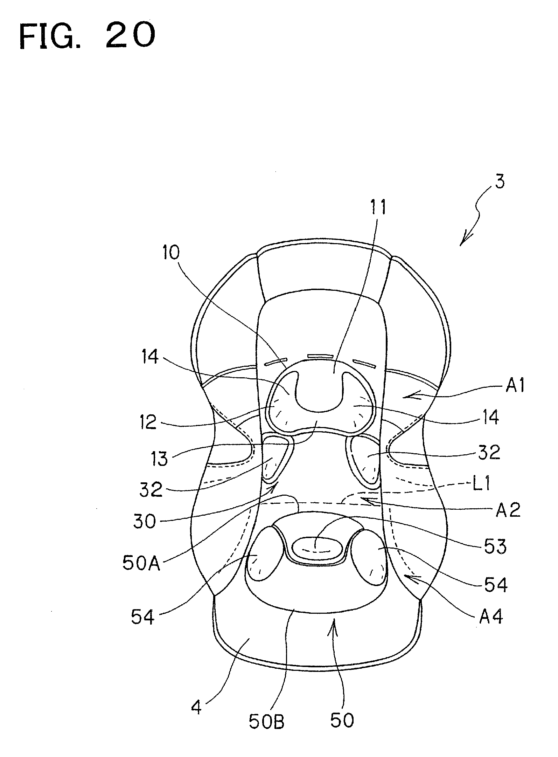

FIG. 19 shows a modification in which the buttock pad 50 is changed. In the modification, the buttock pad 50 includes a first pad portion 50A and a second pad portion 50B which can be separated from each other. The buttock support portion 53 is provided in the first pad portion 50A, and the knee support portion 54 is provided in the second pad portion 50B. The first pad portion 50A and the second pad portion 50B are adapted to be independently detachable from the seat 3. According to the buttock pad 50 having the configuration, the embodiment in which both the first pad portion 50A and the second pad portion 50B are used and the embodiment in which either the first pad portion 50A or the second pad portion 50B is used can be selectively used. For example, such a selective use that both the first pad portion 50A and the second pad portion 50B is used in a lower age in month, and only either the first pad portion 50A or the second pad portion 50B is used when the infant is grown is enabled. In FIG. 19, although the lumber pad 30 has the same configuration as that of FIG. 2, the lumber pad 30 shown in FIG. 18 may be combined with the buttock pad 50 of FIG. 19. FIG. 20 shows the example.

In the above cushions 5, the respective pads 10, 30, and 50 can be attached to the seat 3 in various manners. For example, the pads 10, 30, and 50 may be fixed to the surface of the seat cover 4 in an undetachable manner. As a fixing method for this case, various fixing methods such as hot pressing and sewing can be used. At least a part of the pads 10, 30, and 50 may be detachably attached to the seat 3. When all the pads 10, 30, and 50 are detachably attached to the seat 3, only the necessary pad can be attached to the seat 3 while the unnecessary pads are detached from the seat 3 in the head pad 10, the lumber pad 30, and the buttock pad 50. For example, the embodiment in which only the lumber pad 30 and the buttock pad 50 are used, the embodiment in which only the buttock pad 50 is used, the embodiment in which only the head pad 10 and the buttock pad 50 are used, the embodiment in which only the head pad 10 and the lumber pad 30 are used, and the like can be used separately as appropriate. Desirably, all the pads 10, 30, and 50 are used in an infant period during which the baby head is not held up.

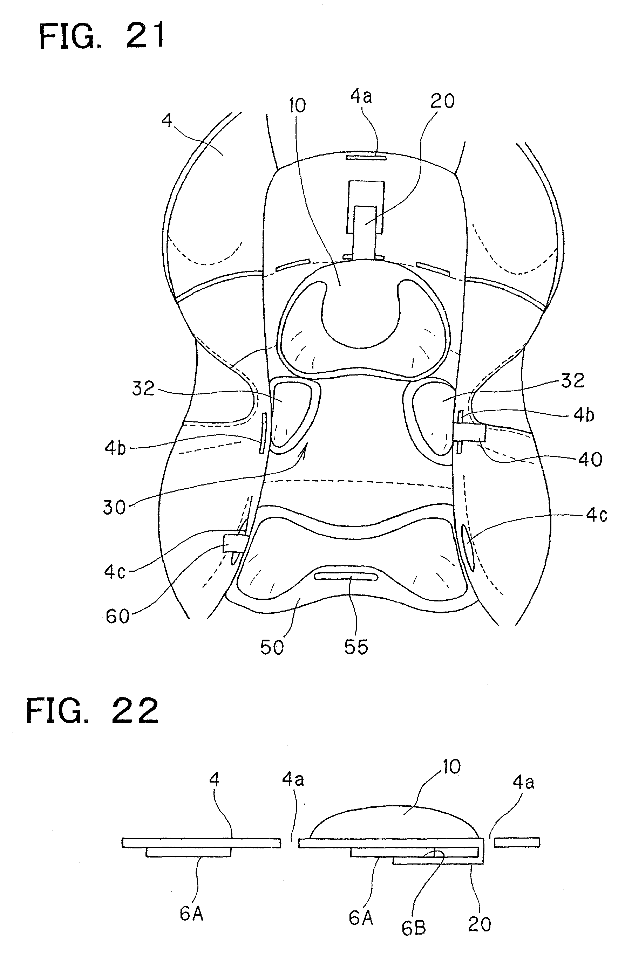

The configuration for attaching the pad to the seat 3 will be described below. FIGS. 21 and 22 show an example in which the cushion 5 shown in FIG. 18 is detachably attached to the seat cover 4. In this example, belt through holes 4a, 4b, and 4c corresponding to the pads 10, 30, and 50 are provided in the seat cover 4. Each of the belt through holes 4a to 4c is a thin and long hole like a button hole. Fastening belts 20, 40, and 60 which are insertable into the belt through holes 4a, 4b, and 4c are provided in the head pad 10, the side support portion 32 of the lumber pad 30, and the buttock pad 50. In FIG. 21, the fastening belt 40 of the left side support portion 32 and the right fastening belt 60 of the buttock pad 50 are omitted.

As shown in FIG. 22, a clamp 6A corresponding to the belt through hole 4a is provided in the backside of the seat cover 4. A clamp 6B which can be connected to the clamp 6A of the seat cover 4 is provided at a front end of the fastening belt 20. Various kinds of connecting means such as a surface fastener and a hook can be used as the clamps 6A and 6B. FIG. 22 shows the fastening belt 20 and belt through hole 4a corresponding to the head pad 10. Similarly the clamps 6A and 6B are provided for the fastening belts 40 and 60 of the lumber pad 30 and buttock pad 50 and the corresponding belt through holes 4b and 4c.

According to the configuration, as shown in FIG.22, the fastening belt 20 pierces through the belt through hole 4a from the surface side of the seat cover 4 to fix the front-end clamp 6B to the clamp 6A on the backside of the seat cover 4, which allows the head pad 10 to be detachably attached to the seat cover 4. When the clamps 6A and 6B are formed by the surface fastener, the position of the head pad 10 can be changed in the longitudinal direction of the seat 3 by changing the position where the clamp 6B is fixed to the clamp 6A. When the plural belt through holes 4a are provided with predetermined intervals along the longitudinal direction of the seat 3, the position of the head pad 10 can further be changed in the longitudinal direction of the seat 3 according to the selection of the belt through hole 4a through which the fastening belt 20 pierces. The position of the head pad 10 is adjustably designed, which allows the head pad 10 to be arranged at the proper position according to the infant physical body.

The lumber pad 30 and the buttock pad 50 can be attached to the seat cover 4 in the same manner. By forming the belt through holes 4b and 4c being longer than widths of the belts 40 and 60 in the longitudinal direction of the seat 3, and placing the plural clamps 6A corresponding to the belt through holes 4b and 4c in the longitudinal direction of the seat 3, the positions of the lumber pad 30 and buttock pad 50 may be adj ustable in the longitudinal direction of the seat 3 respectively. When the clamps 6A and 6B are formed by the fixing means such as the surface fastener in which the connection position can arbitrarily selected, the positions of the lumber pad 30 and buttock pad 50 may be adjustable by providing the single clamp 6A longer than the belt width in the longitudinal direction of the seat 3. The positions of the lumber pad 30 and buttock pad 50 may be adjustable by providing the plural belt through holes 4b and 4c in the longitudinal direction of the seat 3. The integral type lumber pad 30 having the base seat 31 shown in FIG. 2 can be attached to the seat cover 4 by the configuration shown in FIGS. 21 and 22.

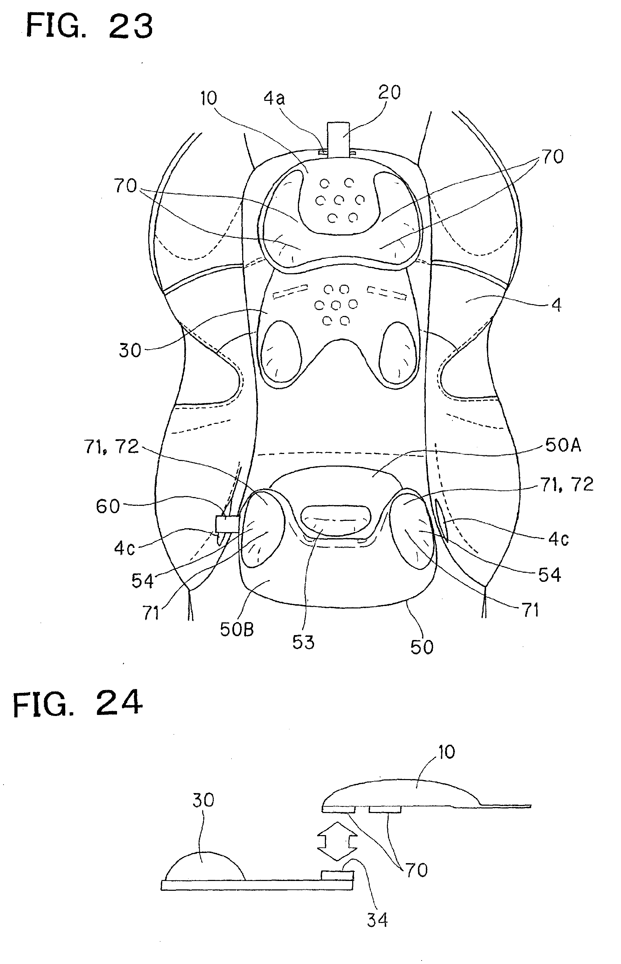

FIGS. 23 and 24 show an example in which the cushion 5 shown in FIG. 19 is detachably attached to the seat cover 4. The example is similar to the example shown in FIG. 21 in that the head pad 10 is attached to the seat cover 4 by the fastening belt 20. However, plural hooks 70 (see FIG. 24) are provided on both sides in the right and left direction of the backside of the head pad 10 in a condition which the positions of the hooks 70 are shifted in the longitudinal direction of the seat 3, and the lumber pad 30 is coupled to head pad 10 by engaging the hook 34 (see FIG. 8) of the lumber pad 30 with the hook 70 in the upper stage or lower stage. The attachment position of the lumber pad 30 to the head pad 10 can be adjusted in the longitudinal direction of the seat 3 by changing the hook 70 with which the hook 34 is engaged. The position of the head pad 10 may be adjustable in the longitudinal direction of the seat 3 by the same configuration as FIG. 21. In this case, the hook 70 is used as the coupling tool. However, the coupling tool is not limited to the hook, but the surface fastener and the like may be used.

Similarly to the example shown in FIGS. 21 and 22, the buttock pad 50 is attached to the seat cover 4 by utilizing the fastening belt 60. However, in the example of FIGS. 23 and 24, the buttock pad 50 is divided into the first pad portion 50A and the second pad portion 50B, and the first pad portion 50A and the second pad portion 50B are coupled to each other by engaging a hook 71 with a hook 72. The hook 71 is provided in the backside of the first pad portion 50A, and the hook 72 is provided in the surface of the second pad portion 50B. Similarly to the hook 70 of the head pad 10, the plural hooks 71 of the first pad portion 50A are provided while the positions of the hooks 71 are shifted in the longitudinal direction of the seat 3. Therefore, the position of the knee support portion 54 of the second pad portion 50B can be changed in the longitudinal direction of the seat 3 with respect to the buttock support portion 53 of the first pad portion 50A.

In the example of FIGS. 23 and 24, the lumber pad 30 may be formed to be able to couple to head pad 10 and to be able to attach the seat cover 4 by the fastening belt 40. Therefore, a usage pattern in which the head pad 10 is taken out from the seat 3 and only the lumber pad 30 or the lumber pad 30 and buttock pad 50 are attached to the seat 3 can also be selected.

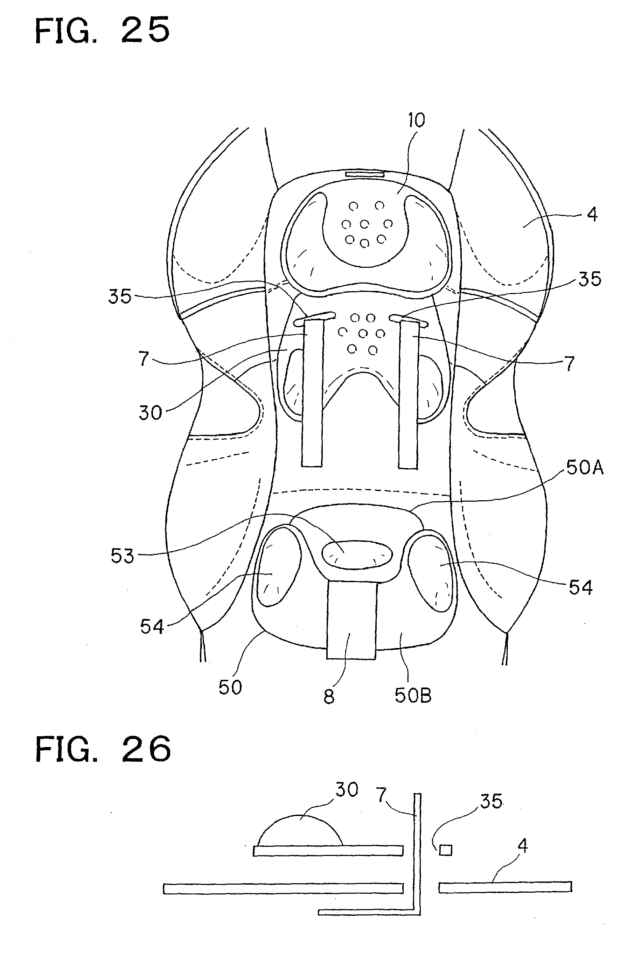

FIGS. 25 and 26 show another example in which the cushion 5 is detachably attached to the seat cover 4. In the example, the cushion 5 is attached to the seat 3 by utilizing the shoulder belt 7 and crotch belt 8 (see FIG. 1) provided in the seat 3. The shoulder belt 7 and the crotch belt 8 are provided to constrain the infant to the seat 3, and are fixed to the base plate which is arranged as a core material inside the seat 3. In this example, the lumber pad 30 is detachably attached to the seat cover 4 by causing the shoulder belt 7 to pierce through the belt through hole 35 (see FIG. 8). Similar to the example of FIG. 23, the head pad 10 and the lumber pad 30 are coupled to each other. The head pad 10 may further be attached to the seat cover 4 by utilizing the fastening belt 20 like the examples shown in FIGS. 21 and 23. The buttock pad 50 is detachably attached to the seat cover 4 by passing the crotch belt 8 through a gap between the first pad portion 50A and the second pad portion 50B. The integral type buttock pad 50 shown in FIG. 2 may be attached to the seat cover 4 by passing the crotch belt 8 through the belt through hole 55 provided in the buttock pad 50. When the belt through holes 55 are provided in the first pad portion 50A and the second pad portion 50B respectively, the crotch belt 8 may be caused to pierce through each of the belt through holes 55 when both the first pad portion 50A and the second pad portion 50B are used, and the crotch belt 8 may be caused to pierce through one of the belt through hole 55 to be used when either the first pad portion 50A or the second pad portion 50B is used.

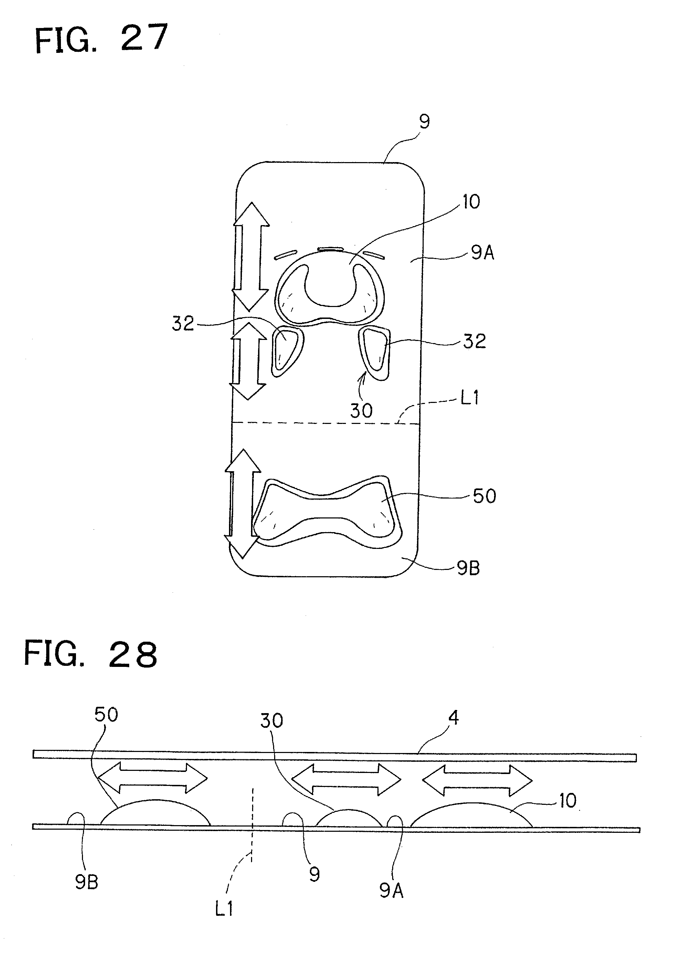

In the above examples, the pads 10, 30, and 50 of the cushion 5 are detachably attached to the seat cover 4. However, the cushion of the invention is not limited to the cushion attached to the seat cover. For example, as shown in FIGS. 27 and 28, the pads 10, 30, and 50 may be attached to the base plate 9 which is arranged as the core material inside the seat 3. When the base plate 9 is configured by combining the back plate 9A and the seat plate 9B so that they are foldable along the bending line L1, the head pad 10 and the lumber pad 30 may be attached to the back plate 9A, and the buttock pad 50 may be attached to the seat plate 9B. When the pads 10, 30, and 50 are attached to the base plate 9, it is not necessary to attach and detach the cushion 5 when the seat cover 4 is taken out from the base plate 9. Particularly, in washing the seat cover 4, there is an advantage that it is not necessary to remove the cushion 5 from the seat cover 4.

The pads 10, 30, and 50 may be fixed to the base plate 9 in an undetachable manner, or the pads 10, 30, and 50 may detachably be attached to the base plate 9. Various coupling means such as the surface fastener, the belt, and the hook or the like may be used as means for detachably attaching the pad to the base plate 9. As shown by arrows in FIGS. 27 and 28, the pads 10, 30, and 50 can be arranged at the optimum positions according to the infant physical body by attaching the pads 10, 30, and 50 so as to be able to adjust the positions in the longitudinal direction of the seat 3.

The invention is not limited to the above configurations, but various changes and modifications could be realized. For example, the head pad 10 may have the configuration in which the neck support portion 13 and the temporal support portion 14 are separated from each other. When the head pad is not required from the viewpoint of usage of the baby carriage, for example, when the cushion of the invention is applied to the baby carriage focusing on only the infant having the relatively higher age in month after the baby head is held up, the head pad is omitted and the cushion may be formed only by the lumber pad and the buttock pad. The configuration in which the pad is attached to the seat is not limited to the above examples, but various modifications can be applied as appropriate. The pad can be attached to the seat cover or the base plate using appropriate means such as the hook, a string, a buckle, and a button. When the interior material is provided in the pad, the interior material may be made of a porous material to impart the air flow to the pad, or the air flow may be imparted to the pad by making many through holes in the interior material. Various skin materials such as cloth and a mesh material may be provided on the surface of the pad.

## Claims

1. A cushion (5) comprising: a lumber pad (30) which is arranged in a lumber support region (A2) of a seat of a baby carriage (1); and a buttock pad (50) which is arranged in a buttock support region (A3) of the seat, **characterized by** that the lumber pad and the buttock pad are separated from each other about a longitudinal direction of the seat, the lumber pad is configured such that an infant is supported from both sides by a pair of side support portions (32) projecting in a mountain-shaped independently from a surroundings at both end portions of a right and left direction of the lumber support region, the buttock pad is configured such that a buttock of the infant is supported by a buttock support portion (53) being projected at a center portion of the right and left direction of the buttock pad, and a knee of the infant is supported from the outside by a pair of knee support portions (54) being projecting larger than the buttock support portion at both end portions of the right and left direction of the pad.

2. The cushion according to claim 1, wherein the pair of side support portions is separated from each other about the right and left direction.

3. The cushion according to claim 1, wherein an edge line (53a) of the buttock support portion of the buttock pad is curved about a height direction so as to draw a concave curved line whose bottom is a central portion of the right and left direction of the buttock pad.

4. The cushion according to claim 3, wherein the buttock support portion and the pair of knee support portions are integrally connected, thereby a smooth curved line is formed from the bottom of the buttock support portion to a vertex of the knee support portion.

5. The cushion according to claim 1, wherein the lumber pad is provided with a first pad portion (50A) and a second pad portion (50B) which are mutually independently detachable to the seat, the first pad portion is provided with the buttock support portion, and the second pad portion is provided with the pair of knee support portions.

6. The cushion according to claim 1, further comprising a head pad (10) which is arranged in a head support region (A1) of the seat.

7. The cushion according to claim 6, wherein a neck support portion (13) extending along a lower edge of the head pad and a pair of temporal support portions (14) extending along both side edges of the head pad are provided as a projection portion for supporting the infant in the head pad.

8. The cushion according to claim 7, wherein an edge line of the neck support portion is curved about a height direction so as to draw a concave curved line whose bottom is a central portion of the right and left direction of the head pad.

9. The cushion according to claim 7 or 8, wherein an inner periphery of the temporal support portion is provided with a support surface (14b) recessed in a cone shape.

10. The cushion according to claim 7, wherein an edge line (14a) of the temporal support portion is gradually lowered toward an upper edge side of the head pad.

11. The cushion according to claim 7 or 10, wherein the projection portion does not exist at least in the central portion of the upper edge of the head pad, thereby a recess portion (15) surrounded by the projection portion is opened to the upper edge side of the head pad.

12. The cushion according to any one of claims 1 to 11, wherein at least one pad is attached to a detachable seat cover (4) covering the surface of the seat position-adjustably in the longitudinal direction of the seat.

13. The cushion according to any one of claims 1 to 11, wherein at least one pad is attached to a base plate (9) which is arranged as a core material inside the seat.

14. The cushion according to claim 13, wherein the pad attached to the base plate is adjustable in position for the longitudinal direction of the seat.
